(19)

**Europäisches Patentamt**

**European Patent Office**

**Office européen des brevets**

(11) **EP 3 890 136 A1**

(12) **EUROPÄISCHE PATENTANMELDUNG**

(43) Veröffentlichungstag:
06.10.2021 Patentblatt 2021/40

(51) Int Cl.:
*H02J 3/00* (2006.01)   *H02J 3/38* (2006.01)

(21) Anmeldenummer: 20166582.5

(22) Anmeldetag: 30.03.2020

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Wobben Properties GmbH**
**26607 Aurich (DE)**

(72) Erfinder:
• **BROMBACH, Johannes**
**13437 Berlin (DE)**
• **MACKENSEN, Ingo**
**26607 Aurich (DE)**
• **BAKKER, Menko**
**26605 Aurich (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN ZUM BETREIBEN EINES UMRICHTERS, INSBESONDERE EINER WINDENERGIEANLAGE**

(57) Die vorliegende Erfindung betrifft ein Verfahren zum Betreiben eines Umrichters, an einem dreiphasigen, elektrischen Versorgungsnetz, umfassend die Schritte: Betreiben des Umrichters in einem ersten Betriebsmodus mittels einer Steuereinheit zum Erzeugen eines Ausgangsstromes, wobei der Umrichter in dem ersten Betriebsmodus spannungsprägend auf das elektrische Versorgungsnetz wirkt; Erfassen eines Netzfehlers im elektrischen Versorgungsnetz mittels eines Erfassungsmittels während des ersten Betriebsmodus; Begrenzen des Ausgangsstromes des Umrichters mittels einer Strombegrenzung, wenn ein Netzfehler im elektrischen Versorgungsnetz während des ersten Betriebsmodus erfasst wurde, insbesondere so, dass der Ausgangsstrom des Umrichters einen vorbestimmten Maximalstrom unterschreitet oder diesem im Wesentlichen entspricht.

Fig. 2

EP 3 890 136 A1

**Beschreibung**

Die vorliegende Erfindung betrifft eine Verfahren zum Betreiben eines Umrichters, insbesondere einer Windenergieanlage, sowie eine Windenergieanlage umfassend einen solchen Umrichter.

Durch die zunehmende Verdrängung konventioneller, synchrongeneratorgetriebener Kraftwerke durch regenerative, umrichterbasierte Erzeuger, verlieren klassische Synchrongenerator immer mehr an Einfluss innerhalb des elektrischen Versorgungsnetzes.

Durch diesen Rückgang an Synchrongeneratoren kommt es ebenfalls zu einer Abnahme der konventionellen, das elektrische Versorgungsnetz stabilisierenden Schwungmassen.

Da die Auswirkungen einer solchen Änderung innerhalb des elektrischen Versorgungsnetzes nahezu unerforscht sind, gibt es Überlegungen, die Umrichter der regenerativen Erzeuger so zu betreiben, dass sie am elektrischen Versorgungsnetz spannungsprägend arbeiten und/oder wie eine konventionelle Synchronmaschine wirken.

Mit anderen Worten sollen die Umrichter auf das elektrische Versorgungsnetz wie eine konventionelle Synchronmaschine wirken und/oder das Verhalten einer konventionellen Synchronmaschine emulieren, insbesondere ohne dabei die Vorzüge der Stromrichtertechnik zu verlieren.

Solche so betriebenen Umrichter werden als spannungsprägend bzw. als virtuelle Synchronmaschine bezeichnet.

Nachteilig an den bisher bekannten spannungsprägenden bzw. synchronmaschinenemulierenden Verfahren ist, dass diese nicht für etwaige, im elektrischen Versorgungsnetz auftretende Netzfehler ausgelegt sind.

Aufgabe der vorliegenden Erfindung ist es daher, zumindest eines der oben genannten Probleme zu adressieren, insbesondere soll ein Regelverfahren zur Beherrschung von Netzfehlern für spannungsprägende bzw. synchronmaschinenemulierenden Verfahren vorgeschlagen werden.

Erfindungsgemäß wird ein Verfahren zum Betreiben eines Umrichters, an einem dreiphasigen, elektrischen Versorgungsnetz, vorgeschlagen, umfassend die Schritte: Betreiben des Umrichters in einem ersten Betriebsmodus mittels einer Steuereinheit zum Erzeugen eines Ausgangsstromes, wobei der Umrichter in dem ersten Betriebsmodus spannungsprägend auf das elektrische Versorgungsnetz wirkt; Erfassen eines Netzfehlers im elektrischen Versorgungsnetz mittels eines Erfassungsmittels während des ersten Betriebsmodus; Begrenzen des Ausgangsstromes des Umrichters mittels einer Strombegrenzung, wenn ein Netzfehler im elektrischen Versorgungsnetz während des ersten Betriebsmodus erfasst wurde, insbesondere so, dass der Ausgangsstrom des Umrichters einen vorbestimmten Maximalstrom unterschreitet oder diesem im Wesentlichen entspricht.

Der Umrichter ist hierfür als Umrichter, insbesondere als Wechselstrom-Umrichter, einer Windenergieanlage und/oder eines elektrischen Speichers ausgebildet und weist insbesondere einen Umrichterausgang auf, der mit einem dreiphasigen, elektrischen Versorgungsnetz verbindbar ist und dazu eingerichtet ist, einen Ausgangsstrom am Umrichterausgang bereitzustellen bzw. in das dreiphasige, elektrische Versorgungsnetz einzuspeisen.

In einer bevorzugten Ausführungsform weist der Umrichter eine Steuereinheit auf, die dazu eingerichtet ist, den Umrichter so anzusteuern, dass der Umrichter am dreiphasigen, elektrischen Versorgungsnetz statisch wie dynamisch wie eine elektromechanische Synchronmaschine erscheint.

Der Umrichter wird somit bevorzugt wie eine virtuelle Synchronmaschine betrieben. Bspw. steuert die Steuereinheit hierfür den Umrichter mittels eines Toleranzbandverfahrens an. Der Umrichter bzw. die Steuereinheit weist bevorzugt ferner eine Vielzahl von Betriebsmodi auf, wobei ein erster Betriebsmodus den Umrichter derart betreibt, dass der Umrichter spannungsprägend am elektrischen Versorgungsnetz arbeitet.

Bevorzugt weist der Umrichter bzw. die Steuereinheit zudem einen zweiten Betriebsmodus auf, wobei der Umrichter im zweiten Betriebsmodus stromprägend auf das elektrische Versorgungsnetz wirkt.

Der Umrichter bzw. die Steuereinheit sind somit bevorzugt wenigstens dazu eingerichtet, in einem ersten und einem zweiten Betriebsmodus betrieben zu werden, insbesondere um an einem Umrichterausgang einen Ausgangsstrom bereitzustellen, der in das elektrische Versorgungsnetz eingespeist werden kann. Hierfür kann der Umrichter bzw. die Steuereinheit bspw. eine Leistungsregelung aufweisen, die dazu vorgesehen ist, den Umrichter spannungsprägend, insbesondere am elektrischen Versorgungsnetz, zu betreiben.

Unter spannungsprägend bzw. einem spannungsprägenden Umrichter (engl. grid forming inverter) werden hierin insbesondere Verfahren und/oder Umrichter verstanden, die dazu ausgelegt und/oder eingerichtet sind, eine definierte Spannung mit vorgegebener Amplitude und Frequenz am elektrischen Versorgungsnetz zur Verfügung zu stellen, insbesondere so, dass sie im Wesentlichen wie eine Spannungsquelle wirken, also bevorzugt eine niedrige Serienimpedanz zum elektrischen Versorgungsnetz aufweisen. Die Aufgabe des Umrichters besteht also im Wesentlichen darin, eine bestimmte Spannung und/oder Frequenz am elektrischen Versorgungsnetz bereitzustellen, also einen sogenannten Netzbildner oder slack bus auszubilden. Ein spannungsprägender Umrichter kann also eine Spannung auch im Leerlauf bereitstellen, bzw. ohne dabei Strom und/oder Leistung einzuspeisen. Hierdurch kann insbesondere ein sogenannter Netzwinkel bereitgestellt werden, was insbesondere ein Bereitstellen einer korrekten Phasenlage für andere Netzteilnehmer, insbesondere Erzeuger, er-

möglich.

Unter stromprägend bzw. einem stromprägenden Umrichter (engl. grid following inverter) werden hierin insbesondere Verfahren und/oder Umrichter verstanden, die dazu ausgelegt und/oder eingerichtet sind, eine elektrische Leistung so in das elektrische Versorgungsnetz einzuspeisen, dass sie im Wesentlichen wie eine Stromquelle wirken, also bevorzugt eine hohe Parallelimpedanz zum elektrischen Versorgungsnetz aufweisen. Die Aufgabe des Umrichters besteht also im Wesentlichen darin, eine festgelegte Wirk- und/oder Blindleistung in das elektrische Versorgungsnetz einzuspeisen, also einen sogenannten PQ bus auszubilden.

Sofern nun in dem ersten Betriebsmodus, in dem der Umrichter spannungsprägend auf das elektrische Versorgungsnetz wirkt, ein Netzfehler mittels eines Erfassungsmittels erfasst wird, wird vorgeschlagen, den Ausgangsstrom des Umrichters zu begrenzen.

Netzfehler sind dabei insbesondere schwere Fehler innerhalb des elektrischen Versorgungsnetzes, wenigstens ein Fehler der nachfolgenden Liste: Spannungseinbruch, Phasensprung, starke Frequenzgradienten und/oder eine Kombination aus diesen drei Fehlern.

Mit Netzfehlern sind hierbei insbesondere Ereignisse gemeint, welchen lokal oder global ein großes Ungleichgewicht vorangegangen ist, welches ohne sofortige Stützung zu einer starken Veränderung der Phase, Spannung oder Frequenz führt.

Es wird also insbesondere vorgeschlagen, all jene Fehler im elektrischen Versorgungsnetz als Netzfehler einzustufen, die zu einem, insbesondere instantanen bzw. schlagartigen, Anstieg des Ausgangsstromes führen bzw. führen würden.

Um Netzfehler im elektrischen Versorgungsnetz, insbesondere während des ersten Betriebsmodus, zu erfassen, werden bevorzugt Erfassungsmittel verwendet, die dazu eingerichtet sind, einen Leistungsanstieg am Umrichterausgang zu erfassen. Solche Erfassungsmittel können auch als Leistungserfassung bezeichnet werden und sind bevorzugt Teil des Umrichters. Bevorzugt umfassen solche Leistungserfassungen wenigstens eine Stromerfassung und eine Spannungserfassung.

Sofern ein Netzfehler im elektrischen Versorgungsnetz während des ersten Betriebsmodus erfasst wurde, wird vorgeschlagen, den Ausgangsstrom des Umrichters, also den Strom, der in das elektrische Versorgungsnetz eingespeist werden soll bzw. wird, zu begrenzen.

Das Begrenzen des Ausgangsstromes erfolgt dabei insbesondere mittels einer Strombegrenzung. Die Strombegrenzung kann hierfür bspw. in Form eines Hysterese-Reglers innerhalb einer Steuereinheit des Umrichters implementiert sein.

Der Ausgangsstrom wird dabei bevorzugt mittels der Strombegrenzung so begrenzt, dass der Ausgangsstrom einen vorbestimmten Maximalstrom unterschreitet oder diesem im Wesentlichen entspricht. Die Strombegrenzung ist somit insbesondere dazu eingerichtet, den Ausgangsstrom des Umrichters derart zu begrenzen, dass der Ausgangsstrom nicht einen vorbestimmten Maximalstrom überschreitet.

Der vorbestimmte Maximalstrom wird bevorzugt in Abhängigkeit der physikalischen Eigenschaften der Halbleiter des Umrichters bestimmt bzw. eingestellt, bspw. durch Strom-Zeit-Flächen oder einem Verlustleistungsmodell der Schaltungen des Halbleiters.

Es ist aber auch möglich, dass der vorbestimmte Maximalstrom durch den Netzbetreiber vorgegeben wird, bspw. in Abhängigkeit eines Kurzschlussstromverhältnisses am Netzanschlusspunkt des Umrichters.

Vorzugsweise ist die Strombegrenzung statisch, insbesondere mittels eines Absolutwertes, und/oder dynamisch, insbesondere mittels eines Referenzsystems, ausgeführt.

Die Strombegrenzung ist bevorzugt in einer bzw. der Steuereinheit des Umrichters implementiert, bspw. durch eine elektrische Schaltung oder mittels steuertechnischen Mittel, wie bspw. einer Software, umgesetzt.

Die Steuereinheit erzeugt bspw. einen Stromsollwert für den Umrichter, insbesondere einen Stromsollwert für ein Toleranzband des Umrichters.

Der Stromsollwert wird über die Strombegrenzung geführt, die bspw. eine obere Grenze und eine untere Grenze aufweist, also einen Absolutwert als obere Grenze und einen Absolutwert als untere Grenze. Die obere Grenze kann auch als maximaler Stromsollwert und die untere Grenze als minimaler Stromsollwert bezeichnet werden. Überschreitet der Stromsollwert bspw. den maximalen Stromsollwert der Strombegrenzung, so gibt die Strombegrenzung als Stromsollwert nur den maximalen Stromsollwert aus. Die Strombegrenzung begrenzt also Stromsollwerte für den Umrichter auf ein Maximum bzw. Minimum.

Unter einer statischen Strombegrenzung ist also insbesondere ein Regler zur Begrenzung eines Ausgangsstromes eines Umrichters zu verstehen:

- dessen Ausgangsgröße sich nur verändert, wenn sich seine Eingangsgröße ändert und

- der keine Eigendynamik aufweist bzw. keine Eigenbewegung ausführt, die bspw. durch Energiespeicher hervorgerufen wird.

Üblicherweise werden solche statischen Regler durch algebraische Gleichungen beschrieben.

Die statische Strombegrenzung hat dabei insbesondere die Aufgabe, den Ausgangsstrommomentanwert des Ausgangsstromes des Umrichters auf einen Wert zu halten. Der Wert ist dabei über eine Halbwelle konstant, also statisch.

Der Stromsollwert kann aber auch dynamisch mit einem Referenzsystem abgeglichen werden bzw.

diesem nachgeführt werden.

Unter einer dynamischen Strombegrenzung ist also insbesondere ein Regler zur Begrenzung eines Ausgangsstromes eines Umrichters zu verstehen:

- dessen Ausgangsgröße sich verändert, auch wenn sich seine Eingangsgröße nicht ändert und

- der eine Eigendynamik aufweist bzw. eine Eigenbewegung ausführt, die bspw. durch interne Energiespeicher hervorgerufen wird, die ge- und entladen werden.

Üblicherweise werden solche dynamischen Regler durch Differenzialgleichungen beschrieben.

Die dynamische Strombegrenzung weist also insbesondere einen veränderlichen Grenzwert, bevorzugt über eine Halbwelle, auf, um insbesondere im Idealfall eine sinusförmige Stromform zu halten.

Vorzugsweise ist die Strombegrenzung statisch ausgeführt, insbesondere mittels eines Absolutwertes, und das Verfahren umfasst ferner wenigstens den Schritt: Messen eines Wirkanteils des Ausgangsstromes.

Es wird somit insbesondere auch vorgeschlagen, dass die Strombegrenzung mittels eines Absolutwertes arbeitet, der in Abhängigkeit eines erfassten Wirkanteils eines Ausgangsstromes des Umrichters eingestellt wird.

Vorzugsweise ist die Strombegrenzung statisch ausgeführt, insbesondere mittels eines Absolutwertes, und das Verfahren umfasst ferner wenigstens den Schritt: Messen einer Verzerrungsblindleistung des Ausgangsstromes.

Hierfür ist bspw. ein Erfassungsmittel am Ausgang des Umrichters angeordnet und das Erfassungsmittel ist dazu eingerichtet, eine Verzerrungsblindleistung zu erfassen.

Die Verzerrungsblindleistung ist insbesondere definiert als Produkt des Effektivwertes der Summe aller harmonischen Ströme des Ausgangsstromes und dem Effektivwert der Grundspannung, bspw. als

$$D = U \cdot I_v = U \cdot \sqrt{\sum_{i=2}^{\infty} I_i^2}.$$

mit der Verzerrungsblindleistung D, dem Effektivwert der Spannung U, dem Verzerrungsblindstrom $I_v$, den Effektivwert des Grundstromes und der Oberschwingungsströme $I_i$.

Die Verzerrungsblindleistung gibt somit insbesondere die Blindleistung aller Harmonischen des Ausgangsstromes wieder.

Bevorzugt wird die Verzerrungsblindleistung insbesondere dazu verwendet, den Umrichter nach Ansprechen der Strombegrenzung wieder geordnet zu einer Spannungsprägung zurückzuführen.

Darüber hinaus kann aber auch ein Verzerrungsblindstrom anstelle der Verzerrungsblindleistung verwendet werden, um den Umrichter nach Ansprechen der Strombegrenzung wieder geordnet zu einer Spannungsprägung zurückzuführen.

Das Verfahren umfasst also insbesondere auch den Schritt:

- Zurückführen zu einer Spannungsprägung nach dem Begrenzen des Ausgangsstromes, insbesondere unter Verwendung eines Verzerrungsblindstromes.

Alternativ oder zusätzlich kann auch ein Spannungszeiger beschleunigt oder abgebremst werden, um einen Verzerrungsblindstrom des Ausgangsstromes zu Null zu regeln.

Bspw. wird der Ausgangsstrom des Umrichters über eine Leistungsregelung eingestellt, die dynamisch ausgeführt ist. Überschreitet die Ausgangsleistung nun durch die Strombegrenzung einen vorgegebenen Leistungssollwert, so wird bspw. der Zeiger der Leistungsregelung abgebremst, um einen passenden Spannungswinkel einzustellen. Im Falle, dass der vorgegebene Leistungssollwert unterschritten wird, wird der Zeiger der Leistungsregelung beschleunigt, insbesondere um einen passen Spannungswinkel einzustellen.

Es wird somit insbesondere auch vorgeschlagen, dass der Umrichter eine dynamische Leistungsregelung umfassend einen Spannungszeiger und das Verfahren ferner den Schritt umfasst:

- Beschleunigen und/oder Abbremsen des Spannungszeigers, insbesondere um einen Spannungswinkel einzustellen.

Alternativ oder zusätzlich kann auch ein Spannungszeiger beschleunigt oder abgebremst werden, um einen Wirkleistungssollwert einzustellen.

Das Verfahren umfasst also insbesondere auch den Schritt:

- Zurückführen zu einer Spannungsprägung nach dem Begrenzen des Ausgangsstromes, insbesondere unter Verwendung einer Verzerrungsblindleistung und/oder eines Wirkleistungssollwertes.

Vorzugsweise ist die Strombegrenzung dynamisch ausgeführt, insbesondere mittels eines Referenzsystems, und das Verfahren umfasst ferner den Schritt: Einrasten eines Reglers in einer Ausgangsstromregelung für den ersten Betriebsmodus, insbesondere nach einer Überlast und/oder in Abhängigkeit wenigstens eines vorbestimmten Kriteriums.

Es wird also insbesondere vorgeschlagen, dass das Verfahren wenigstens ein erstes Kriterium umfasst, um den Betriebsmodus zu wechseln und ein zweites Kriterium, um den Betriebsmodus wieder zurück zu wechseln. Dies kann bspw. durch einen Hysterese-Regler erfolgen, der einen erstes und ein zweites Kriterium umfasst, um zwischen Betriebsmodi hin und her zu wechseln.

Das Verfahren umfasst somit insbesondere auch den Schritt:

- Resynchronisieren des Umrichters mittels eines ersten und eines zweiten Kriteriums.

Alternativ oder zusätzlich kann auch eine Phase und/oder eine Amplitude einer Ausgangsklemmspannung am Umrichter erfasst werden, insbesondere um den Umrichter zu resynchronisieren.

Alternativ oder zusätzlich kann auch ein Spannungsreferenzsystem bzw. ein Spannungszeiger auf eine erfasste Spannung, insbesondere auf eine erfasste Ausgangsklemmspannung, eingestellt werden, insbesondere um den Umrichter zu resynchronisieren.

Alternativ oder zusätzlich kann auch ein Leistungssollwert durch eine Leistungsregelung, insbesondere mittels einer Beschleunigung oder eines Abbremsens eines Spannungszeigers, eingestellt werden, insbesondere um den Umrichter zu resynchronisieren.

Erfindungsgemäß wird ferner eine Vorrichtung zum Einspeisen elektrischer Energie in ein dreiphasiges, elektrisches Versorgungsnetz, insbesondere ein Umrichter, bevorzugt einer Windenergieanlage und/oder eines elektrischen Speichers, vorgeschlagen, wenigstens umfassend eine Steuereinheit, die dazu eingerichtet ist, ein vorstehend und/oder nachstehend beschriebenes Verfahren auszuführen.

Erfindungsgemäß wird ferner eine Windenergieanlage und/oder ein elektrischer Speicher vorgeschlagen, wenigstens umfassend eine vorstehend oder nachstehend beschriebene Vorrichtung zum Einspeisen elektrischer Energie und/oder eine Steuereinheit, die dazu eingerichtet, ein vorstehend und/oder nachstehend beschriebenes Verfahren auszuführen. Die vorliegende Erfindung wird nun nachfolgend exemplarisch und anhand von Ausführungsbeispielen und unter Bezugnahme auf die begleitenden Figuren näher erläutert, wobei für gleiche oder ähnliche Baugruppen dieselben Bezugszeichen verwendet werden.

Fig. 1     zeigt eine schematische Ansicht einer Windenergieanlage gemäß einer Ausführungsform.

Fig. 2     zeigt eine schematische Ansicht einer Windenergieanlage an einem Anschlusspunkt gemäß einer Ausführungsform.

Fig. 3A    zeigt eine Steuereinheit eines Umrichters gemäß einer Ausführungsform.

Fig. 3B    zeigt das Verhalten des Umrichters gemäß der Ausführungsform.

Fig. 4A    zeigt eine Steuereinheit eines Umrichters gemäß einerweiteren Ausführungsform.

Fig. 4B    zeigt das Verhalten des Umrichters gemäß der weiteren Ausführungsform.

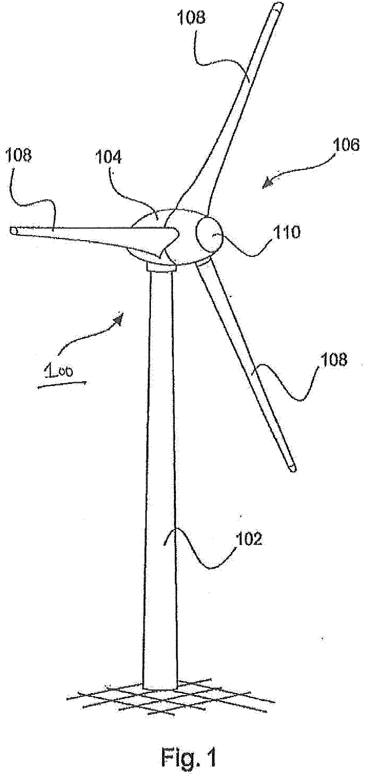

Fig. 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Der Generator ist mittels eines Umrichters an ein elektrisches Netz, bspw. ein Windparknetz oder ein elektrisches Versorgungsnetz, angeschlossen, um einen dreiphasigen Wechselstrom einzuspeisen.

Die Windenergieanlage umfasst hierfür eine vorstehend oder nachstehend beschriebene Steuereinheit.

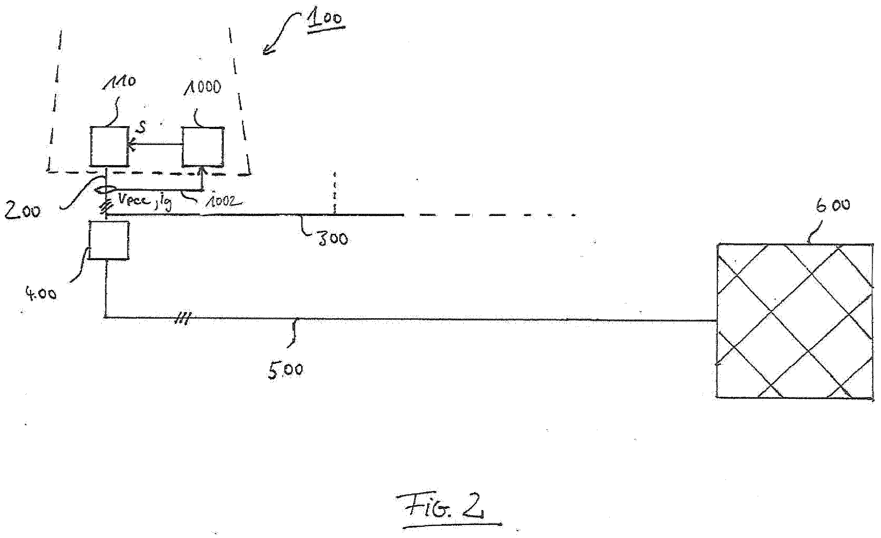

Fig. 2 zeigt eine schematische Ansicht einer Windenergieanlage 100 an einem Anschlusspunkt 200 eines elektrischen Versorgungsnetzes 600 gemäß einer Ausführungsform.

Die Windenergieanlage 100, bspw. wie in Fig. 1 gezeigt, weist einen Umrichter 110 und eine Steuereinheit 1000 auf.

Die Steuereinheit 1000 ist dazu eingerichtet, ein vorstehend oder nachstehend beschriebenes Verfahren auszuführen und insbesondere den Umrichter 110 so mittels eines Steuerwertes S anzusteuern, dass der Umrichter 110 spannungsprägend auf das elektrische Versorgungsnetz 600 wirkt.

Hierzu weist die Steuereinheit 1000 unter anderem eine Spannungs- und/oder Stromerfassung 1002 auf, die dazu eingerichtet ist, eine dreiphasige Spannung $V_{PCC}$ am Anschlusspunkt 200 und/oder den vom Umrichter erzeugten Strom ig zu erfassen.

Der vom Umrichter 110 erzeugte Strom ig wird an dem Anschlusspunkt 200 bspw. in ein Windparknetz 300 eingespeist, welches mehrere Windenergieanlagen miteinander verbindet.

Das Windparknetz 300 ist ferner über einen Transformator 400 und eine Verbindungsleitung 500 mit einem elektrischen Versorgungsnetz 600 verbunden.

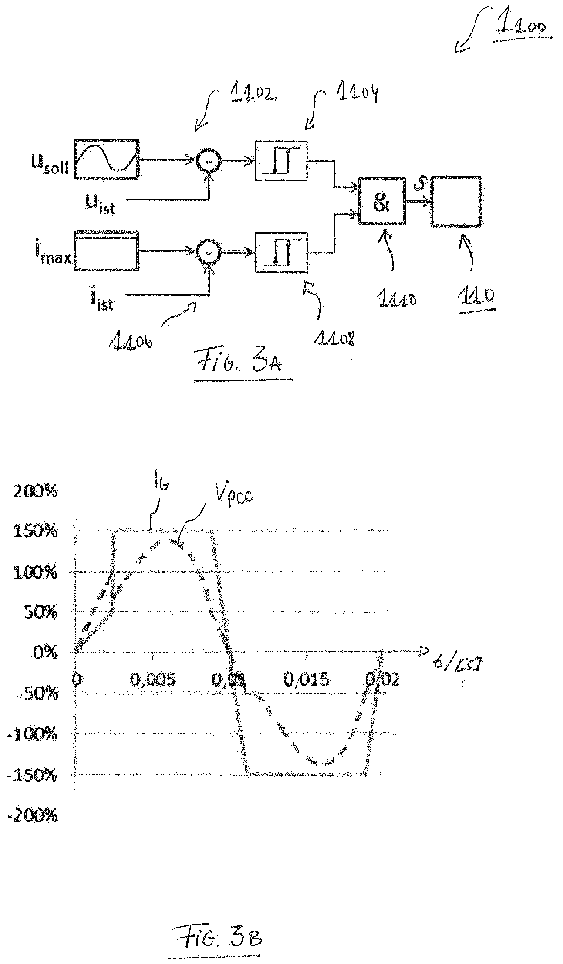

Fig. 3A zeigt eine Steuereinheit 1100 eines Umrichters 110 gemäß einer Ausführungsform.

Die Steuereinheit 1100 umfasst einen Spannungsabgleich 1102 mit einem Hystereseregler 1104 und einem Stromabgleich 1106 mit einem Hystereseregler 1108, die mittels eines Gatters 1110 für einem Steuerwert S zusammengeführt werden, um den Umrichter 110 anzusteuern.

Der Spannungsabgleich 1102 vergleicht eine erfasste Ist-Spannung Uist, bspw. die Spannung $V_{PCC}$ am Anschlusspunkt, mit einem Spannungssollwert $U_{soll}$.

Die Differenz hieraus wird über den Hysteresregler 1104 zum Gatter 1110 geführt.

Der Stromabgleich 1106 vergleicht einen Ist-Strom $I_{ist}$ mit einem maximalen Strom $I_{max}$ und begrenzt diesen, wenn nötig. Der Stromabgleich 1106 ist somit als statische Strombegrenzung ausgeführt, deren Ausgang ebenfalls über einen Hysteresregler 1108 dem Gatter 1110 zugeführt wird.

Das Gatter 1110 ermittelt aus dem Spannungs- und dem Stromabgleich einen entsprechenden Steuerwert für den Umrichter 110.

Die Steuereinheit 1100 weist somit insbesondere eine Spannungsprägung mit statischer Strombegrenzung auf.

Fig. 3B zeigt das Verhalten des Umrichters 110 mit einer Steuereinheit 1100, insbesondere wie in Figur 3A, die eine statische Strombegrenzung aufweist.

Die gestrichelte Linie zeigt den Verlauf der Spannung $V_{PCC}$ am Anschlusspunkt mit einem Phasensprung von ca. 30° bei 0,002 Sekunden.

Die durchgezogene Linie zeigt den Verlauf des, durch den Umrichter erzeugten Stromes $I_g$.

Durch den Phasensprung der Spannung steigt der, vom Umrichter erzeugte Strom schlagartig an und wird durch die Strombegrenzung bei 150-Prozent Nennstrom begrenzt.

Die eigentliche Strombegrenzung erfolgt dabei sowohl in positiver als auch in negativer Richtung.

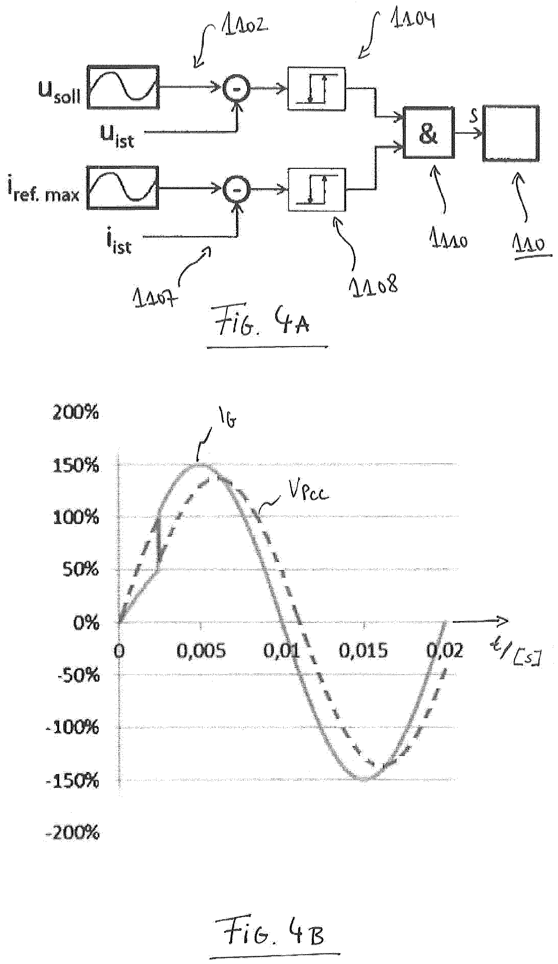

Fig. 4A zeigt eine Steuereinheit 1100 eines Umrichters 110 gemäß einer Ausführungsform.

Die Steuereinheit 1100 umfasst einen Spannungsabgleich 1102 mit einem Hysteresregler 1104 und einem Stromabgleich 1106 mit einem Hysteresregler 1108, die mittels eines Gatters 1110 für einem Steuerwert S zusammengeführt werden, um den Umrichter 110 anzusteuern.

Der Spannungsabgleich 1102 vergleicht eine erfasste Ist-Spannung $U_{ist}$, bspw. die Spannung $V_{PCC}$ am Anschlusspunkt, mit einem Spannungssollwert $U_{soll}$. Die Differenz hieraus wird über den Hysteresregler 1104 zum Gatter 1110 geführt.

Der Stromabgleich 1106 vergleicht einen Ist-Strom $I_{ist}$ mit einem maximalen Referenzstrom $I_{ref.max}$ und begrenzt diesen. Der Stromabgleich 1106 ist somit als dynamische Strombegrenzung mit einem Referenzzeiger ausgeführt, die ebenfalls über einen Hysteresregler geführt wird.

Die Strombegrenzung ist also insbesondere ein drehender Stromreferenzzeiger bzw. ein Referenzsystem.

Das Gatter 1110 ermittelt aus dem Spannungs- und dem Stromabgleich einen entsprechenden Steuerwert für den Umrichter 110.

Die Steuereinheit 1100 weist also eine Spannungsprägung mit dynamischer Strombegrenzung auf.

Fig. 4B zeigt das Verhalten des Umrichters 110 mit einer Steuereinheit 1100, insbesondere wie in Figur 4A, die eine dynamische Strombegrenzung aufweist.

Die gestrichelte Linie zeigt den Verlauf der Spannung $V_{PCC}$ am Anschlusspunkt mit einem Phasensprung von ca. 30° bei 0,002 Sekunden.

Die durchgezogene Linie zeigt den Verlauf des, durch den Umrichter erzeugten Stromes $I_g$.

Durch den Phasensprung der Spannung steigt der vom Umrichter erzeugte Strom schlagartig an und wird durch die Strombegrenzung dynamisch und insbesondere sinusförmig begrenzt.

Die Strombegrenzung erfolgt dabei insbesondere sowohl in positiver als auch in negativer Richtung.

**Patentansprüche**

1. Verfahren zum Betreiben eines Umrichters, an einem dreiphasigen, elektrischen Versorgungsnetz, umfassend die Schritte:

   - Betreiben des Umrichters in einem ersten Betriebsmodus mittels einer Steuereinheit zum Erzeugen eines Ausgangsstromes, wobei der Umrichter in dem ersten Betriebsmodus spannungsprägend auf das elektrische Versorgungsnetz wirkt;
   - Erfassen eines Netzfehlers im elektrischen Versorgungsnetz mittels eines Erfassungsmittels während des ersten Betriebsmodus;
   - Begrenzen des Ausgangsstromes des Umrichters mittels einer Strombegrenzung, wenn ein Netzfehler im elektrischen Versorgungsnetz während des ersten Betriebsmodus erfasst wurde, insbesondere so, dass der Ausgangsstrom des Umrichters einen vorbestimmten Maximalstrom unterschreitet oder diesem im Wesentlichen entspricht.

2. Verfahren zum Betreiben eines Umrichters nach Anspruch 1, wobei

   - die Strombegrenzung statisch, insbesondere mittels eines Absolutwertes, und/oder dynamisch, insbesondere mittels eines Referenzsystems, ausgeführt ist.

3. Verfahren zum Betreiben eines Umrichters nach Anspruch 1 oder 2, wobei die Strombegrenzung statisch ausgeführt ist, insbesondere mittels eines Absolutwertes, und das Verfahren ferner wenigstens den Schritt umfasst:

   - Messen eines Wirkanteils des Ausgangsstromes.

4. Verfahren zum Betreiben eines Umrichters nach einem der vorstehenden Ansprüche, wobei die Strombegrenzung statisch ausgeführt ist, insbesondere mittels eines Absolutwertes, und das Verfahren ferner wenigstens den Schritt umfasst:

- Messen einer Verzerrungsblindleistung des Ausgangsstromes.

5. Verfahren zum Betreiben eines Umrichters nach einem der vorstehenden Ansprüche, wobei die Strombegrenzung statisch ausgeführt ist, insbesondere mittels eines Absolutwertes, und das Verfahren ferner wenigstens den Schritt umfasst:

- Beschleunigen oder Abbremsen eines Spannungszeigers, um eine Verzerrungsblindleistung des Ausgangsstromes zu Null zu regeln.

6. Verfahren zum Betreiben eines Umrichters nach Anspruch 1, wobei die Strombegrenzung statisch ausgeführt ist, insbesondere mittels eines Absolutwertes, und das Verfahren ferner wenigstens den Schritt umfasst:

- Beschleunigen oder Abbremsen eines Spannungszeigers, um einen Wirkleistungssollwert einzustellen.

7. Verfahren zum Betreiben eines Umrichters nach einem der vorstehenden Ansprüche, wobei die Strombegrenzung dynamisch ausgeführt ist, insbesondere mittels eines Referenzsystems, und das Verfahren ferner wenigstens den Schritt umfasst:

- Einrasten eines Reglers in einer Ausgangsstromregelung für den ersten Betriebsmodus, insbesondere nach einer Überlast und/oder in Abhängigkeit wenigstens eines vorbestimmten Kriteriums.

8. Verfahren zum Betreiben eines Umrichters nach einem der vorstehenden Ansprüche, wobei die Strombegrenzung dynamisch ausgeführt ist, insbesondere mittels eines Referenzsystems, und das Verfahren ferner wenigstens den Schritt umfasst:

- Erfassen einer Phase und außerdem oder alternativ einer Amplitude einer Ausgangsklemmspannung am Umrichter.

9. Verfahren zum Betreiben eines Umrichters nach einem der vorstehenden Ansprüche, wobei die Strombegrenzung dynamisch ausgeführt ist, insbesondere mittels eines Referenzsystems, und das Verfahren ferner wenigstens den Schritt umfasst:

- Einstellen eines Spannungsreferenzsystems auf eine erfasste Spannung, insbesondere auf eine erfasste Ausgangsklemmspannung.

10. Verfahren zum Betreiben eines Umrichters nach einem der vorstehenden Ansprüche, wobei die Strombegrenzung dynamisch ausgeführt ist, insbesondere mittels eines Referenzsystems, und das Verfahren ferner wenigstens den Schritt umfasst:

- Einstellen eines Leistungssollwertes durch eine Leistungsregelung, insbesondere mittels einer Beschleunigung oder eines Abbremsens eines Spannungszeigers.

11. Vorrichtung zum Einspeisen elektrischer Energie in ein dreiphasiges, elektrisches Versorgungsnetz, insbesondere Umrichter, bevorzugt einer Windenergieanlage und/oder eines elektrischen Speichers, wenigstens umfassend eine Steuereinheit, die dazu eingerichtet ist, ein Verfahren nach einem der Ansprüche 1 bis 10 auszuführen.

12. Windenergieanlage und/oder elektrischer Speicher, wenigstens umfassend eine Vorrichtung zum Einspeisen elektrischer Energie nach Anspruch 11 und/oder eine Steuereinheit, die dazu eingerichtet ist, ein Verfahren nach einem der Ansprüche 1 bis 10 auszuführen.

Fig. 1

Fig. 2

$U_{soll}$
$U_{ist}$

1102

1104

$i_{max}$
$i_{ist}$

&

S

110

1106

1108

1110

Fig. 3A

200%
150%
100%
50%
0%
-50%
-100%
-150%
-200%

$I_G$

$V_{pcc}$

0        0,005      0,01      0,015     0,02        $t/[s]$

Fig. 3B

Fig. 4A

Fig. 4B

Europäisches Patentamt
European Patent Office
Office européen des brevets

# EUROPÄISCHER RECHERCHENBERICHT

Nummer der Anmeldung

EP 20 16 6582

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/202772 A1 (WOBBEN PROPERTIES GMBH [DE]) 8. November 2018 (2018-11-08) | 1,2,7-12 | INV. H02J3/00 H02J3/38 |
| Y | * Seite 8, Zeile 28 - Seite 12, Zeile 3; Abbildungen 3,4,5 * ----- | 3-6 | |
| X | DE 10 2014 016664 A1 (SENVION GMBH [DE]) 12. Mai 2016 (2016-05-12) | 1,11,12 | |
| Y | * Absätze [0012] - [0020]; Abbildungen 1,3,6,7,10,11 * ----- | 3-6 | |
| X | DE 10 2018 115794 A1 (WOBBEN PROPERTIES GMBH [DE]) 2. Januar 2020 (2020-01-02) * Absätze [0011] - [0013], [0026] - [0047], [0065] - [0068]; Abbildung 2 * ----- | 1,11,12 | |
| X | GB 2 432 267 A (CONVERTEAM LTD [GB]) 16. Mai 2007 (2007-05-16) * Seite 2, Zeile 23 - Seite 3, Zeile 14; Abbildungen 2-5 * * Seite 22, Zeile 6 - Seite 36, Zeile 7 * ----- | 1,11,12 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 11. Mai 2020 | Bergler, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

ANHANG ZUM EUROPÄISCHEN RECHERCHENBERICHT
ÜBER DIE EUROPÄISCHE PATENTANMELDUNG NR.

EP 3 890 136 A1

EP 20 16 6582

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2020

| Im Recherchenbericht angeführtes Patentdokument | Datum der Veröffentlichung | Mitglied(er) der Patentfamilie | Datum der Veröffentlichung |
|---|---|---|---|
| WO 2018202772 A1 | 08-11-2018 | CA 3061836 A1 | 22-11-2019 |
| | | CN 110603722 A | 20-12-2019 |
| | | DE 102017109728 A1 | 08-11-2018 |
| | | EP 3619802 A1 | 11-03-2020 |
| | | KR 20200003891 A | 10-01-2020 |
| | | US 2020059178 A1 | 20-02-2020 |
| | | WO 2018202772 A1 | 08-11-2018 |
| DE 102014016664 A1 | 12-05-2016 | KEINE | |
| DE 102018115794 A1 | 02-01-2020 | DE 102018115794 A1 | 02-01-2020 |
| | | WO 2020002656 A1 | 02-01-2020 |
| GB 2432267 A | 16-05-2007 | AU 2006313527 A1 | 18-05-2007 |
| | | BR PI0618506 A2 | 06-09-2011 |
| | | CA 2629179 A1 | 18-05-2007 |
| | | CN 101310434 A | 19-11-2008 |
| | | DK 1946436 T3 | 24-09-2012 |
| | | EP 1946436 A1 | 23-07-2008 |
| | | EP 2429073 A2 | 14-03-2012 |
| | | ES 2390133 T3 | 06-11-2012 |
| | | GB 2432266 A | 16-05-2007 |
| | | GB 2432267 A | 16-05-2007 |
| | | JP 5191051 B2 | 24-04-2013 |
| | | JP 2009516488 A | 16-04-2009 |
| | | KR 20080077161 A | 21-08-2008 |
| | | NO 337459 B1 | 18-04-2016 |
| | | NZ 568460 A | 24-12-2009 |
| | | PT 1946436 E | 24-08-2012 |
| | | WO 2007054729 A1 | 18-05-2007 |

EPO FORM P0461

Für nähere Einzelheiten zu diesem Anhang : siehe Amtsblatt des Europäischen Patentamts, Nr.12/82